## Europäisches Patentamt
## European Patent Office
## Office européen des brevets

(11) Veröffentlichungsnummer: **0 219 856**
A2

(12) **EUROPÄISCHE PATENTANMELDUNG**

(21) Anmeldenummer: 86114593.6

(22) Anmeldetag: 21.10.86

(51) Int. Cl.⁴: **B 23 Q 3/10**

(30) Priorität: 25.10.85 DE 3538034

(43) Veröffentlichungstag der Anmeldung:
29.04.87 Patentblatt 87/18

(84) Benannte Vertragsstaaten:
DE FR GB IT SE

(71) Anmelder: BAYERISCHE MOTOREN WERKE
Aktiengesellschaft
Postfach 40 02 40 Petuelring 130 - AJ-36
D-8000 München 40(DE)

(72) Erfinder: Arianto, Bambang
Schönstrasse 27a
D-8000 München 90(DE)

(74) Vertreter: Bücken, Helmut
Bayerische Motoren Werke Aktiengesellschaft Postfach
40 02 40 Petuelring 130 - AJ-30
D-8000 München 40(DE)

(54) Elementsystem zum Aufbau von Haltevorrichtungen für Werkstücke.

(57) Die Erfindung betrifft ein Elementsystem zum Aufbau von Haltevorrichtungen, wie sie beispielsweise im Prototypenbau benötigt werden. Hierzu wird ein Baukasten vorgeschlagen, der aus nur wenigen Einzelelementen besteht und hiermit durch unterschiedliche Kombination auf eine Vielzahl von zu haltenden Werkstücken abgestellt werden kann.

Fig. 1

EP 0 219 856 A2

1

Elementsystem zum Aufbau von Haltevorrichtungen für Werkstücke

Die Erfindung bezieht sich auf eine Vorrichtung der im Oberbegriff des ersten Anspruchs angegebenen Art.

Eine derartige Vorrichtung ist beispielsweise aus der Zeitschrift: Werkstatt und Betrieb 1974, Seite 765 ff (Heft 12) bekannt. Die dort beschriebenen Baukastenelemente gestatten einen variablen Aufbau von Haltevorrichtungen, um beispielsweise Werkstücke auf Bearbeitungstischen zu halten.

Der Nachteil dieser bekannten Vorrichtung besteht jedoch darin, daß sie sehr aufwendig aufgebaut ist, da alle Nuten als T-Nuten ausgeführt sind und zur Befestigung Nutensteine und Nutenspanner benötigt werden. Dieser Aufwand ist nur gerechtfertigt, wenn Werkstücke mit sehr hoher Genauigkeit bearbeitet werden müssen. Sie eignen sich zwar prinzipiell auch dafür, großflächige, dreidimensionale Werkstücke, wie Bleche, zu halten. Jedoch ist hierbei nicht die absolut hohe Genauigkeit erforderlich, da diese Bleche üblicherweise noch mit Hand weiterbearbeitet werden, wenn es sich bei dem herzustellenden Werkstück um Prototypen handelt.

Aufgabe der vorliegenden Erfindung ist es, ein universell einsetzbares Elementsystem zum Aufbau von Haltevorrichtungen für Werkstücke gemäß dem Oberbegriff der ersten Anspruchs dahingehend weiterzubilden, daß neben der universellen Einsetzbarkeit die Herstellung der einzelnen Elemente wesentlich preisgünstiger ist.

2

Diese Aufgabe wird erfindungsgemäß durch die kennzeichnenden Merkmale des ersten Anspruchs gelöst. Aufgrund der Anordnung von Gewindebohrungen in den Kreuzungspunkten in der Grundplatte sowie die Verwendung von Verdrehsicherungen ist eine einfache Befestigung der Aufbauelemente mit Hilfe von Gewindestangen möglich. Dadurch können die T-Nuten entfallen und es können einfache U-förmige Nuten verwendet werden, die von einfachen Fräswerkzeugen hergestellt werden können.

Durch die Weiterbildung nach Anspruch 2 können mit universell einsetzbaren einheitlichen Elementen Abzweigungen hergestellt werden. Das Vorsehen von Stützwinkeln unterschiedlicher Größe - wie aus dem gattungsbildenden Stand der Technik bekannt - ist hierfür nicht erforderlich.

Die Ansprüche 3 - 5 beschreiben bevorzugte Ausführungsbeispiele der Befestigungselemente zum Herstellen von Abzweigungen bzw. Parallelzweigen.

Um die handelsüblichen Spannelemente in ihrer Höhe feineinstellen zu können und hierbei eine Vielzahl von unterschiedlich hohen Aufbauelementen zu sparen, wird die Weiterbildung nach Anspruch 5 vorgeschlagen. Die Ansprüche 6 und 7 beschreiben bevorzugte Ausführungsbeispiele dieses höhenverstellbaren Aufbauelementes.

Die Grundplatte des höhenverstellbaren Aufbauelementes ist entweder direkt auf der Grundplatte des Grundelementes oder auf einer entsprechend ausgebildeten Abschlußplatte befestigbar.

Im folgenden wird die Erfindung anhand eines bevorzugten Ausführungsbeispiels näher erläutert.

Es stellen dar:

Fig. 1     eine perspektifische Ansicht des erfindungsgemäßen Elementsystems;

3

Fig. 2    eine perspektifische Ansicht eines höhenverstellbaren Aufbauelementes.

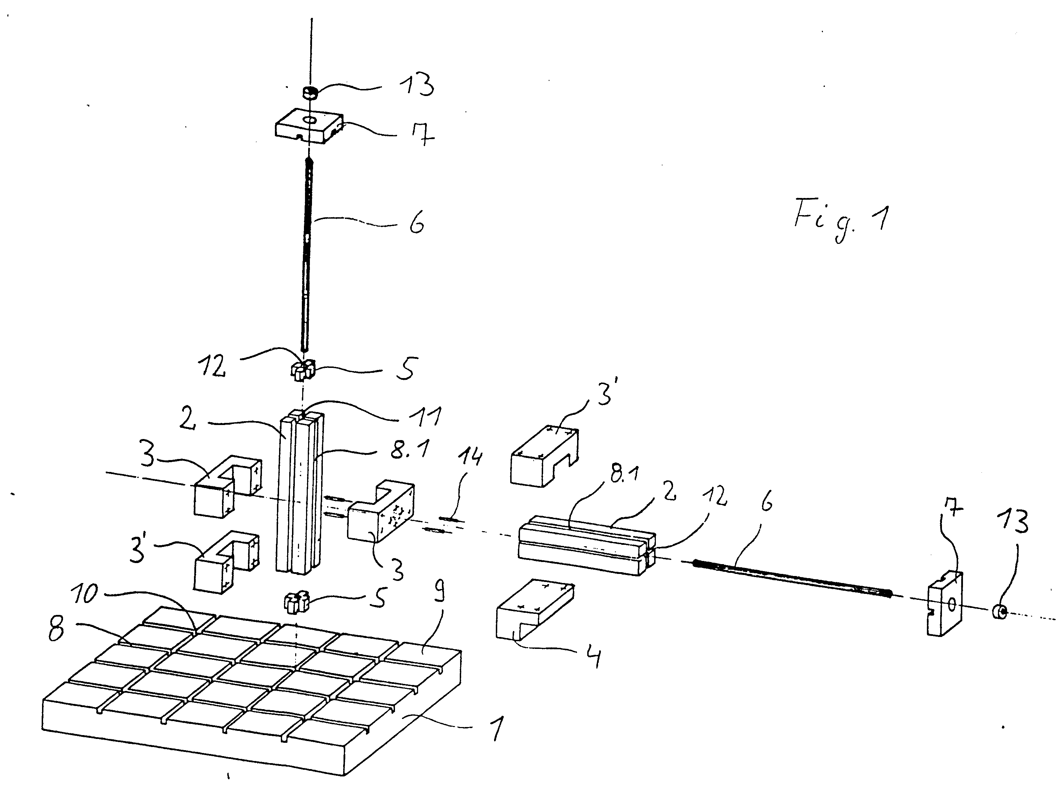

In Fig. 1 ist mit 1 das Grundelement, mit 2 ein Aufbauelement, mit 3 eine Schelle, mit 4 ein Winkelelement, mit 5 eine Verdrehsicherung, mit 6 eine Gewindestange und mit 7 eine Abschlußplatte bezeichnet.

Das Grundelement 1 besteht aus einer genuteten Platte aus Stahl oder Guß. Die Nuten 8 haben einen U-förmigen Querschnitt und sind rechtwinklig sich kreuzend in der Grundplatte angeordnet. Die hierdurch abgeteilten Felder 9 haben gleiche Kantenlänge. In den Kreuzungspunkten der Nuten 8 sind in der Grundplatte am Nutengrund Gewindebohrungen 10 vorgesehen.

Die beiden in Fig. 1 dargestellten Aufbauelemente 2 sind als Quader ausgebildet. Sie besitzen auf ihren beiden Stirnseiten sowie auf jeder Umfangsseite ebenfalls Nuten 8.1. Diese Nuten 8.1 stimmen mit den Nuten 8 in dem Grundelement 1 in Form und Tiefe überein. Auf den beiden Stirnseiten sind diese Nuten derart angeordnet, daß sie sich in der Längsachse kreuzen. Weiterhin weist das Aufbauelement 2 eine Axialbohrung 11 auf.

Zum Befestigen eines Aufbauelementes 2 an einem Grundelement 1 dient die Gewindestange 6, die das Aufbauelement 2 axial durchsetzt und in eine Gewindebohrung 10 im Grundelement 1 eingeschraubt wird. Als Verdrehsicherung 5 für das Aufbauelement 2 dient das kreuzförmige Element. Es ist derart ausgebildet, daß es in die Nuten in der Stirnseite des Aufbauelementes 2 und in das Grundelement eingelegt werden kann. Die Verdrehsicherung 5 besitzt zur Aufnahme der Gewindestange 6 ebenfalls eine zentrische Bohrung 12.

Das freie Ende der Gewindestange 6 dient zur Aufnahme einer Abschlußplatte 7, die zur Stirnseite des Aufbauelementes kongruierende Nuten aufweist. Wird auf die Abschlußplatte 7 ein Spannele-

4

ment befestigt, ist es also erforderlich, daß die Abschlußplatte verdrehsicher gehalten wird, ist zwischen der Stirnseite des Aufbauelementes 2 und der Abschlußplatte 7 ebenfalls eine Verdrehsicherung 5 anzuordnen. Die Abschlußplatte 7 weist zum Befestigen in ihrer Längsachse einen Gewindeeinsatz 13 auf, der mit der Gewindestange 6 verschraubt werden kann. Dadurch werden die Verdrehsicherungen 5 und das Aufbauelement 2 über die Gewindestange zwischen der Grundplatte 1 und der Abschlußplatte 7 eingespannt. Auch ist es denkbar, anstelle der Abschlußplatte 7 bei einer benötigten größeren Höhe als die eines Aufbauelementes ein weiteres Aufbauelement über eine Verdrehsicherung 5 und eine entsprechend lang ausgebildete Gewindestange an dem Grundelement 1 zu befestigen.

Zur Erzeugung von Abzweigungen oder Parallelästen dienen die Schelle 3 und das Winkelelement 4. Die Schelle 3 ist U-förmig ausgebildet und wird mit einer weiteren Schelle zu einem das Aufbauelement kraftschlüssig umschließenden Halter zusammengeschraubt. Als Verdrehsicherung dienen Zentrierstifte 14, die in entsprechenden Bohrungen in dem die beiden Schenkel verbindenden Steg 3.1 eingesetzt werden. Zur Befestigung eines Aufbauelementes 2 weist der Steg 3.1 eine zentrisch angeordnete Gewindebohrung zur Aufnahme der das Aufbauelement 2 spannenden Gewindestange 6 auf. Die Außenseite des Steges weist ebenfalls zwei Bohrungen zur Aufnahme weiterer Zentrierstifte 14 auf. Diese Zentrierstifte 14 dienen zur Verdrehsicherung des Aufbauelementes.

Eine andere Möglichkeit zum Bilden einer Abzweigung besteht darin, eine Schelle mit einem Winkelelement 4 zu verbinden. Eine hierzu geeignete Schelle 3' hat im Gegensatz zu den Schellen 3 um die halbe Kantenlänge des Aufbauelementes 2 verlängerte Schenkel. Der freie Schenkel des Winkelelementes 4 kann nun wiederum ein Aufbauelement 2 stehend oder liegend aufnehmen. Zur stehenden Befestigung des Aufbauelementes 2 wird wieder die Gewindestange 6 verwendet, die in einer zentrisch angeordneten Bohrung einschraubt wird. Als Verdrehsicherung dienen auch hier die Zentrierstifte 14.

Zur liegenden Aufnahme eines Aufbauelementes 2 dient der freie Schenkel des Winkelelementes 4 zusammen mit einer Schelle 3'. Diese wird mit dem freien Schenkel des Winkelelementes 4 zu einem das Aufbauelement 2 umschließenden Halter zusammengeschraubt.

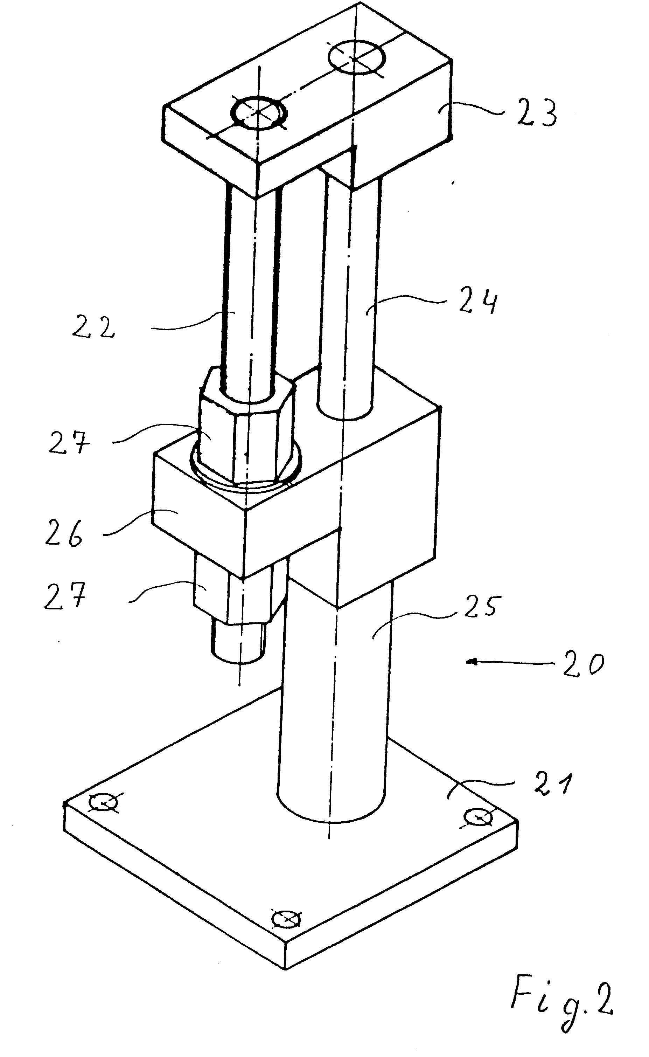

In Fig. 2 ist perspektifisch ein höhenverstellbares Aufbauelement 20 dargestellt. Es besteht aus einer ebenen Grundplatte 21 und einer über eine feststellbare Gewindespindel 22 verstellbaren Plattform 23. Als Verdrehsicherung für die Plattform 23 dient eine Geradführung 24, die in einem Zylinder 25, der fest mit der Grundplatte 21 verbunden ist, gleitet. Der Zylinder 25 hat an seinem freien oberen Ende einen Vorsprung 26, der zur Aufnahme der Gewindespindel dient. Zum Festlegen der Gewindespindel dienen zwei auf beiden Seiten der Nase 26 angeordnete Muttern 27. Die Plattform 23 dient zur Aufnahme von an sich bekannten Spannelementen und kann hierfür entsprechend ausgebildet sein.

Das höhenverstellbare Aufbauelement 22 wird - je nach Erfordernissen - entweder direkt mit dem Grundelement 1 über Schrauben verbunden oder es wird auf eine entsprechende Abschlußplatte 7, die mit einem Aufbauelement 2 verbunden ist, befestigt.

Der Vorteil des erfindungsgemäßen Elementsystems liegt darin, daß nur eine ganz geringe Anzahl von unterschiedlichen Elementen bereitgestellt werden muß. Diese können frei miteinander kombiniert werden, um Werkstücke unterschiedlicher Größe und Form sicher und zuverlässig zu halten.

Patentansprüche

1. Elementsystem zum Aufbau von Haltevorrichtungen für Werkstücke, vorzugsweise großflächige, dreidimensional ausgerichtete Werkstücke, bestehend aus einem Grundelement mit einem Raster aus sich rechtwinklig kreuzenden Nuten, daran befestigbaren allseitig genuteten Aufbauelementen mit Befestigungselementen sowie mit an den Aufbauelementen befestigbaren Spannelementen für die Werkstücke, gekennzeichnet durch die Kombination folgender Merkmale:

a) das Grundelement (1) weist in den Kreuzungspunkten der Nuten (8) Gewindebohrungen (10) auf,

b) die Aufbauelemente (2) weisen auch auf den beiden Stirnseiten sich kreuzende Nuten auf und besitzen eine im Kreuzungspunkt der Nuten angeordnete Axialbohrung (11),

c) als Verdrehsicherung (5) für die Aufbauelemente (2) sind kreuzförmige Elemente vorgesehen, die in den Kreuzungspunkten der Nuten einlegbar und etwa die doppelte Nutentiefe als Höhe aufweisen,

d) als Befestigungselemente dienen Gewindestangen (6), deren freies Ende in die zentrische Bohrung einer kreuzförmig genuteten Abschlußplatte (7) mit Hilfe eines Gewindeeinsatzes (13) gehalten ist.

2. Elementsystem nach Anspruch 1, dadurch gekennzeichnet, daß zur Herstellung von Abzweigungen U-förmige Schellen (3,3') vorgesehen sind, die mit einem Winkelelement (4) oder einer weiteren Schelle (3) zu einem die

2

Aufbauelemente (2) kraftschlüssig umschließenden Halter verbindbar sind und Bohrungen zum Befestigen weiterer Aufbauelemente (2) aufweisen.

3. Elementsystem nach Anspruch 2,
dadurch gekennzeichnet, daß die Schellen (3,3') auf ihrer rückwärtigen Grundfläche Bohrungen zur Aufnahme von Zentrierstiften aufweisen, wobei die Bohrungen derart angeordnet sind, daß die Zentrierstifte (14) in mindestens zwei gegenüberliegenden Nuten (8') in den Aufbauelementen (2) hineinragen.

4. Elementsystem nach Anspruch 2,
dadurch gekennzeichnet, daß die Winkelelemente (4) auf ihren Schenkeln Befestigungsbohrungen zur Befestigung einer weiteren Schelle (3') und/oder zum Anbringen von Zentrierstiften (14) mit zentral angeordneter Bohrung zur Aufnahme der Gewindestange (6) aufweisen.

5. Elementsystem nach einem der vorangegangenen Ansprüche,
dadurch gekennzeichnet, daß als weiteres Aufbauelement ein höhenverstellbares Stützelement (20) vorgesehen ist.

6. Elementsystem nach Anspruch 5,
dadurch gekennzeichnet, daß das Stützelement (20) aus einer Grundplatte (21) mit einer über eine gegen Verdrehen sicherbare Gewindespindel (22) höhenverstellbaren Plattform (23) besteht.

7. Elementsystem nach einem der Ansprüche 5 oder 6,
dadurch gekennzeichnet, daß parallel zur Gewindespindel (22) eine Gradführung (24) für die Plattform (23) vorgesehen ist.

8. Elementsystem nach einem der vorangegangenen Ansprüche, dadurch gekennzeichnet, daß die Abschlußplatte (7) Aufnahmebohrungen zum Befestigen der Grundplatte (21) der höhenverstellbaren Stützelemente (20) aufweist.

Fig. 1

0219856

Fig.2